# EUROPÄISCHE PATENTSCHRIFT

(11) **EP 1 334 304 B1**
(45) Veröffentlichungstag und Bekanntmachung des Hinweises auf die Patenterteilung: **22.08.2007**
(21) Anmeldenummer: 01994544.3
(22) Anmeldetag: 26.10.2001
(51) Int. Cl.: F16N 7/38, B65G 45/08

(54) **SYSTEM ZUR SCHMIERUNG UND ÜBERWACHUNG EINES SCHMIERFÄHIGEN ELEMENTS**
SYSTEM FOR LUBRICATING AND MONITORING A LUBRICATABLE ELEMENT
SYSTEME DE LUBRIFICATION ET DE SURVEILLANCE D'UN ELEMENT APTE A LA LUBRIFICATION

(30) Priorität: 15.11.2000 FR 0014732
(43) Veröffentlichungstag der Anmeldung: 13.08.2003
(73) Patentinhaber: Willy Vogel Aktiengesellschaft, 12277 Berlin (DE); Vogel Mecafluid S.A., 49404 Saumue Cédex (FR)
(72) Erfinder: JAVELLY, Christian, 49404 Saumur Cédex (FR); MALBRUNOT, Guy, 49404 Saumur Cédex (FR); COURJAULT, Jerôme, 49404 Saumur Cédex (FR)
(74) Vertreter: Grünecker, Kinkeldey, Stockmair & Schwanhäusser Anwaltssozietät
(86) Internationale Anmeldenummer: PCT/EP2001/012433
(87) Internationale Veröffentlichungsnummer: WO 2002/040913

(56) Entgegenhaltungen:
- EP-A- 0 811 568
- DE-A- 4 406 099
- DE-U- 1 984 854
- GB-A- 2 104 978
- US-A- 3 073 415
- US-A- 4 527 661
- US-A- 5 669 839

## Beschreibung

Die vorliegende Erfindung betrifft den Bereich der vorausschauenden Instandhaltung von Elementen, die einer Abnutzung oder einem Verschleiß unterliegen können.

Die vorliegende Erfindung fällt ebenso in den Bereich der Schmierung derartiger Elemente. Die Elemente können zu einer Fördereinrichtung gehören, beispielsweise von der Art einer Rolltreppe oder auch von der Art, die für die Überführung von Gegenständen in das Innere einer Fabrik oder eines Lagers verwendet werden, wie beispielsweise eine Fördereinrichtung einer Straße zur Sterilisierung von Konservendosen in einer Nahrungsmittelfabrik.

Die Vorrichtungen zur Schmierung während des Betriebs umfassen im allgemeinen ein Schmiermittelverteilerteil, das mit dem zu schmierenden Organ während der Bewegung des Organes in Kontakt kommt, wobei die Synchronisierung dadurch gewährleistet wird, daß der Antrieb der Vorrichtung durch das zu schmierende Organ erfolgt. Diesbezüglich ist das französische Dokument Nr. 2 749 571 bekannt, das insbesondere bei Rolltreppen oder Rollsteigen Anwendung findet, bei denen es für eine zuverlässige Schmierung sorgt.

Dieses Dokument beschreibt eine automatische Schmiervorrichtung mit einer Mehrzahl von Pumpen, die längs einer Bahn angetrieben werden und mit einem Tragelement versehen sind, das ein Teil trägt, das relativ zu dem Tragelement translationsbeweglich ist und mit einem Schmiernippel eines beweglichen Organs in Kontakt kommen kann, um während einer Schmierungsphase Schmiermittel dorthinein einspritzen zu können. Die Pumpen sind durch ein endloses Verbindungsmittel verbunden. Die Schmiervorrichtung wird durch die Einwirkung der Schmiernippel auf die beweglichen Teile der Pumpen angetrieben. Während der Schmierungsphase, ist der bewegliche Teil einer Pumpe schon beim Kontakt zwischen dem beweglichen Teil und dem Schmiernippel koaxial zu dem entsprechenden Schmiernippel. Die Schmiervorrichtung umfasst ein Mittel, um das Tragelement einer Pumpe relativ zu dem entsprechenden Schmiernippel unbeweglich zu halten, und das bewegliche Teil verschiebt sich senkrecht zu der Bahn des Schmiernippels.

Im nächstkommenden Stand der Technik, der US 4,445,168, ist eine Vorrichtung und ein Verfahren zur mikrocomputergesteuerten Kontrolle von Schmiersystemen beschrieben. Ein Mikrocomputer erhält hierzu Eingangssignale aus einer Schmierstation.

Die US 4,527,661 beschreibt ein adaptives Steuersystem für eine Werkzeugmaschine oder ähnlichem, bei dem ein Temperatursensor eingesetzt wird, um eine Spindellagertemperatur zu messen. Zwei weitere Sensoren messen die radiale und axiale Verschiebung der Spindel. In Abhängigkeit von den Messergebnissen dieser Sensoren wird mittels einer Datenverarbeitungseinrichtung der Ölgehalt eines Schmiernebels, der aus einer Öl-Luftmischung besteht, eingestellt. Der Schmiernebel wird auf die Lager in Abhängigkeit von der Lagertemperatur gesprüht.

Es existiert auch ein Schmierungssystem mit nur einer einzelnen Pumpe mit Hin- und Herbewegung.

Im Nahrungsmittelsektor werden zahlreiche Förderbänder verwendet und umfassen gelenkige Glieder, Achsen und meistens Rollen, die dazu bestimmt sind, auf - einer Rollbahn zu rollen. Um die Lebensdauer des Förderbandes zu verlängern hat es sich als notwendig herausgestellt, die Gelenke zwischen den Gliedern und die Lager der Rollen zu schmieren. Diese Schmierung wird herkömmlicherweise von einer Bedienungsperson manuell ausgeführt, was sich als kostspielig erwiesen 20 hat, hinsichtlich der Arbeitszeit der Bedienungsperson und der Dauer des Stillstands des Förderbandes, der im allgemeinen einen Stillstand weiterer Maschinen stromab oder stromauf von dem Förderband erforderlich macht. Zudem kann die Bedienungsperson vergessen, eines der Elemente des, Förderbandes zu schmieren, oder kann dort eine ungenügende oder im Gegenteil eine übermäßige Schmiermittelmenge einbringen, was im ersten Fall eine übermäßige Abnutzung des Bandes und im anderen Fall ein Ausfließen von Schmiermittel zur Folge hat, das hinsichtlich der in Einrichtungen der Nahrungsmittelindustrie geltenden strengen Hygienenormen verhängnisvoll ist.

Außerdem sind die Betriebsbedingungen wegen der erhöhten Betriebstemperatur, der Temperaturänderung zwischen den Betriebsperioden und den Stillstandsperioden, im allgemeinen während der Nacht, und wegen der starken Feuchtigkeit, insbesondere im Fall eines bei einer Sterilisationsmaschine für Konservendosen angebrachten Bandes, manchmal streng.

Eine unzulängliche Schmierung bringt daher die Gefahr mit sich, eine rasche Abnutzung des Bandes und damit eine Zunahme der Energieverluste und einen übermäßigen Verbrauch des oder der elektrischen Antriebsmotoren, eine Längung der Kette und damit eine Erhöhung des Abstandes zwischen zwei Elementen, die sich bei bestimmten Anwendungen als störend herausstellt, insbesondere in dem Fall, wenn ein zu transportierendes Objekt an mit dem Band fest verbundenen Schaukeln aufgehängt ist, beispielsweise in einer Fabrik zur Herstellung von Fahrzeugen, und zuletzt ein Reißen der Kette mit einer erzwungenen Unterbrechung der Fördereinrichtung und einem Stillstand der umgebenden Maschinen zu bewirken.

Die Erfindung schlägt vor, die Nachteile der gegenwärtigen Systeme zu beseitigen.

Die Erfindung schlägt vor, eine Bewertung des Zustands eines Förderelements in einstellbaren Intervallen durchzuführen, ohne den Betrieb der Fördereinrichtung zu unterbrechen.

Die Erfindung schlägt vor, einer Schmierungsfunktion eine Überwachungsfunktion hinzuzufügen.

Das Schmierungssystem ist gemäß einem Aspekt der Erfindung für zumindest ein schmierfähiges Element bestimmt. Das System umfaßt einen Einspritzkopf für Schmiermittel, der geeignet ist, zumindest in regelmäßigen Intervallen mit dem Element in Kontakt zu kommen. Das System umfaßt ein Mittel zum Bewerten des Zustandes des Elementes.

Der Einspritzkopf kann dafür geeignet sein, zumindest in regelmäßigen Intervallen in Kontakt zu kommen .

Das Element kann eine Achse sein, die zwei Kettenglieder einer Fördereinrichtung verbindet oder auch ein Rollelement einer Fördereinrichtung.

Vorteilhafterweise umfaßt das Element ein Aufnahmeorgan, das geeignet ist, mit dem Einspritzkopf zusammenzuwirken, und ein zu schmierendes aktives Teil, und das System umfaßt ein Mittel zum Bewerten des Zustands des aktiven Teils. Das Aufnahmeorgan mündet in das aktive Teil.

Bei einer Ausführungsform der Erfindung umfaßt das Mittel zur Bewertung einen Aufnehmer für den Schmiermitteldruck. Der Aufnehmer kann von piezoelektrischer Art sein, die am Ausgang ein analoges Spannungs- oder Stromsignal abgibt.

Bei einer Ausführungsform der Erfindung ist der Aufnehmer in Fließrichtung des Schmiermittels stromauf vom Einspritzkopf angeordnet.

Vorzugsweise ist der Aufnehmer in einer Dosierkammer angeordnet.

Bei einer Ausführungsform der Erfindung umfaßt das System Mittel zur Speicherung von Daten, die von dem Mittel zur Bewertung abgegeben werden. Man kann daher einen Verlauf des Zustands des Elements ermitteln. Im Falle einer Fördereinrichtung, die eine Mehrzahl von Elementen einer einzigen Art oder von manchmal zwei oder drei verschiedenen Arten umfaßt, wird der individuelle Zustand jedes Elements gespeichert, so daß man für ein Element eine Instandhaltungsmaßnahme vorsehen kann, der es bedarf. Vorteilhafterweise nimmt man eine Markierung zumindest eines Elements vor, so daß das System jedes Element während seines Vorbeilaufs beim Kontakt mit dem Schmierungssystem erkennt.

Vorteilhafterweise umfaßt das System eine Erfassungskarte und einen Rechner. Die Erfassungskarte bildet ein Schnittstelle zwischen dem Mittel zur Bewertung und dem Rechner.

Bei einer Ausführungsform der Erfindung umfaßt der Rechner Berechnungsmittel, die geeignet sind, eine Druckkurve als Funktion der Zeit zu liefern, Mittel zum Vergleich der Kurve mit vorbestimmten Werten und Wärnmittel im Falle des Erreichens eines der Werte. Man kann die Druckkurve als Funktion der Zeit für jeden Schmierungszyklus jedes Elements oder auch mit geringerer Häufigkeit aufzeichnen, beispielsweise einmal pro Tag für jedes Element. Ein Schmierungszyklus umfaßt eine vorbereitende Phase der Annäherung des Einspritzkopfes, eine Phase des eigentlichen Einspritzens, während der die Druckkurve als Funktion der Zeit aufgenommen wird, und eine Phase der Ablösung, während der das Fallen des Drucks gemessen werden kann.

Bei einer Ausführungsform der Erfindung umfassen die Werte den maximalen Druck, den minimalen Druck und die maximale Zunahme des Drucks.

Die vorliegende Erfindung schlägt ebenfalls ein System zur Überwachung des Zustandes eines aktiven Teils eines Elements vor, das ein Mittel zur Schmierung des Elements und ein Mittel zur Bewertung des Zustandes des Elements umfaßt. Das Mittel zur Bewertung kann an dem Mittel zur Schmierung angebracht sein.

Vorteilhafterweise gehört das Element zu einem Förderband, das eine Mehrzahl identischer Elemente umfaßt.

Die Erfindung schlägt ebenfalls ein Verfahren zur Überwachung des Zustandes eines aktiven Teils eines Elements vor, bei dem Schmiermittel in das Element eingespritzt und der Zustand des Elements bewertet wird.

Insbesondere wird der Zustand einer zu schmierenden Achse überwacht, Schmiermittel in einen Raum eingespritzt, der in Kontakt mit der Achse steht und hierzu vorgesehen ist, und während der Einspritzung eine den Zustand der Achse wiedergebende Variable gemessen. Die Variable kann der Einspritzdruck des Schmiermittels sein. Es versteht sich beispielsweise, daß, wenn die Schmierungsöffnung verstopft ist, der Druck übermäßig hohe Werte annehmen wird. Wenn die Achse eine erhebliche Abnutzung mit einem Spiel relativ zu den Elementen aufweist, die sie verbindet, wird umgekehrt das Schmiermittel leichter fließen können und der Druck des Schmiermittels wird während der Einspritzung äußerst niedrig sein.

Die vorliegende Erfindung wird durch das Studium der ausführlichen Beschreibung einer Ausführungsform besser verstanden werden, die ein den Schutzumfang in keiner Weise beschränkendes Beispiel darstellt und durch die beigefügten Zeichnungen veranschaulicht wird:
Figur 1 ist eine schematische Ansicht des Systems gemäß einem Ausführungsbeispiel der Erfindung;
Figuren 2 bis 4 zeigen Beispiele für Druckkurven als Funktion der Zeit während eines Schmierungszyklus ;
Figur 5 ist eine Ansicht eines Fensters zur Konfiguration der Parameter der Bewertung;
Figur 6 ist eine Ansicht eines Fensters zur Konfiguration der Parameter der Fördereinrichtung;
Figur 7 ist eine Ansicht eines Fensters mit einer Zusammenfassung der durchgeführten Bewertungen für die Gesamtheit der Elemente einer Fördereinrichtung;
Figur 8 ist eine Ansicht eines Fensters mit einer Zusammenfassung, in der die Elemente entsprechend ihres Zustandes klassifiziert werden; und
Figur 9 ist eine teilweise Schnittansicht eines Beispiels einer Dosierpumpe, an der ein Druckaufnehmer und gegebenenfalls ein Temperaturaufnehmer angebracht sein können; und
Figur 10 ist eine zu Figur 9 ähnliche Ansicht, die die Dosierpumpe während des Betriebs zeigt.

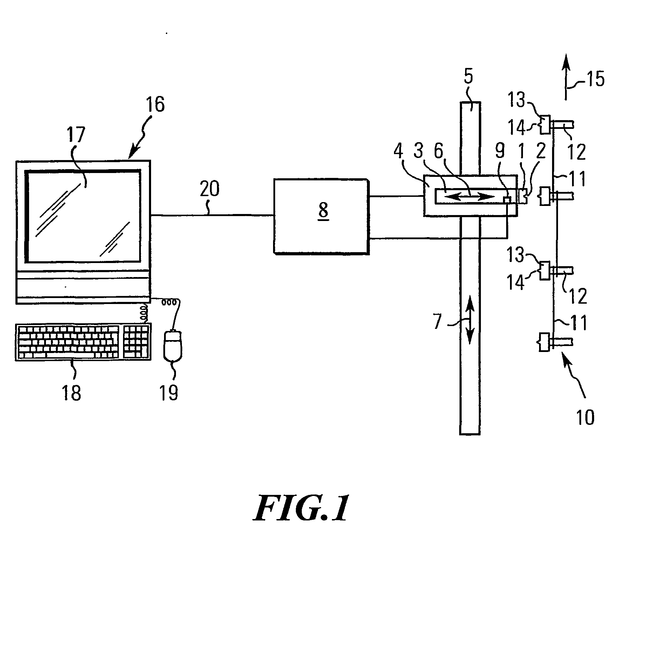

Wie in Figur 1 zu sehen ist, umfaßt das System einen Einspritzkopf 1, der mit einer Vertiefung 2 versehen ist, die geeignet ist, mit einem Schmiernippel zusammenzuwirken, eine Schmierungspumpe 3, vorzugsweise von der Art einer Dosierpumpe, die geeignet ist, jedesmal, wenn sie betätigt wird, das Pumpen einer festgelegten Dosiermenge von Schmiermittel auszuführen, einen Pumpen-Tragschlitten 4 und eine Schiene 5, die dafür vorgesehen ist, in einer festen Position angebracht zu werden.

Die Pumpe 3 ist relativ zum Schlitten 4 in der durch den Pfeil 6 dargestellten Richtung translationsbeweglich. Hierzu kann ein Betätigungsglied elektrischer oder pneumatischer Art vorgesehen sein, das aber aus Gründen der Übersichtlichkeit nicht dargestellt wurde. Der Schlitten 4 ist relativ zu der Schiene 5 in der durch den Pfeil 7 dargestellten Richtung beweglich. Die Translationsverschiebung des Schlittens 4 relativ zu der Schiene 5 kann entweder durch ein nicht dargestelltes Betätigungsglied oder durch eine Vorrichtung zur vorübergehenden Verriegelung der Bewegung des Schlittens 4 an einer Fördereinrichtung gewährleistet werden. Ein derartiges Verriegelungsmittel kann einen beweglichen Finger umfassen, der in einer Position in einen Raum eingreift, der von einem Element der Fördereinrichtung während seiner Verschiebung überquert wird. Bei der Rückwärtsbewegung des Zeigers kann der Schlitten 4 unter der Wirkung der Schwerkraft und/oder eines Federsystems und/oder Gegengewichts und/oder eines pneumatischen oder elektrischen Betätigungsgliedes in seine Ausgangsstellung zurückkehren.

Das System umfaßt außerdem einen Automaten 8, dem die Steuerung des Betätigungsgliedes der Pumpe 3 und der Bewegung des Schlittens 4 obliegt. Die Pumpe 3 ist mit einem Druckaufnehmer 9 ausgestattet, der ebenso mit dem Automaten 8 verbunden ist. Der Druckaufnehmer 9 kann analoger beispielsweise piezoresistiver Art sein und einen zum gemessenen Druck proportionalen Ausgangsstrom liefern.

Die Fördereinrichtung, mit der das System zusammenwirken soll, trägt das Bezugszeichen 10 und wurde nur teilweise wiedergegeben. Die Fördereinrichtung 10 umfaßt eine Mehrzahl von Verbindungselementen 11, die im allgemeinen in Richtung ihrer Verschiebung ausgerichtet sind, eine Mehrzahl von Achsen 12, die im allgemeinen in der Richtung quer zu ihrer Verschiebung ausgerichtet sind und die Verbindungselemente 11 untereinander verbinden, und eine Mehrzahl von Rollen 13, die am Ende der Achsen 12 angebracht sind, um es der Fördereinrichtung 10 zu ermöglichen, von einer nicht dargestellten stationären Rollbahn getragen zu werden. Um die Schmierung der Elemente der Fördereinrichtung 10 zu gewährleisten, die sich zueinander verschieben, insbesondere an den in Längsrichtung liegenden Enden der Fördereinrichtung, ist das Ende jeder Achse 12 mit einem Schmiernippel 14 verbunden, der über die entsprechende Rolle 13 vorsteht und die Form einer Ausstülpung aufweist, die geeignet ist, mit der Vertiefung 2 des Einspritzkopfes 1 zusammenzuwirken. Es könnte jedoch ebenso ein dem Schmiernippel entsprechendes Element von hohler Form vorstellbar sein, das geeignet ist, mit einem mit einer Ausstülpung versehenen Einspritzkopf zusammenzuwirken.

Bei dem dargestellten Beispiel verschiebt sich der zu dem System benachbarte Teil der Fördereinrichtung 10 in Richtung des Pfeiles 15, wobei der Rücklauf der Fördereinrichtung nicht dargestellt ist. Die Einspritzpumpe 3 ist in der Lage, mit dem Schmiernippel 14 während der Bewegung der Fördereinrichtung 10 in Kontakt zu kommen, um in dieser Phase die Übertragung von Schmiermittel zwischen der Pumpe 3 und dem Schmiernippel 14 durchzuführen, sich dann vom Schmiernippel 14 zu trennen, um in entgegengesetzter Richtung zu Pfeil 15 zurückzukehren und mit einem weiteren Schmiernippel 14 in Kontakt zu kommen, welcher der folgende Schmiernippel oder ein weiter entfernter Schmiernippel sein kann. Diese Schritte werden von dem Automaten 8 gesteuert.

Das System umfaßt außerdem einen Rechner 16, der mit einem Bildschirm 17, einer Tastatur 18 und einer Steuerungsmaus 19 und, nicht dargestellt, mit zumindest einem Prozessor, einem Festspeicher, einem Arbeitsspeicher und einem Bus zur Kommunikation zwischen diesen Elementen versehen ist. Eine Datenübertragungsverbindung 20, die vom ADC- oder auch vom RS 232-Typ sein kann, dient als Schnittstelle zwischen dem Automaten 8 und dem Rechner 16. Der Rechner 16 besitzt ein in dem Festspeicher gespeichertes Programm, das in der Lage ist, von dem Automaten 8 stammende Daten zu verarbeiten, die einerseits von dem Aufnehmer 9 stammende Druckdaten und andererseits von dem Automaten 8 selber stammende Steuerungs- und Kontrolldaten betreffen.

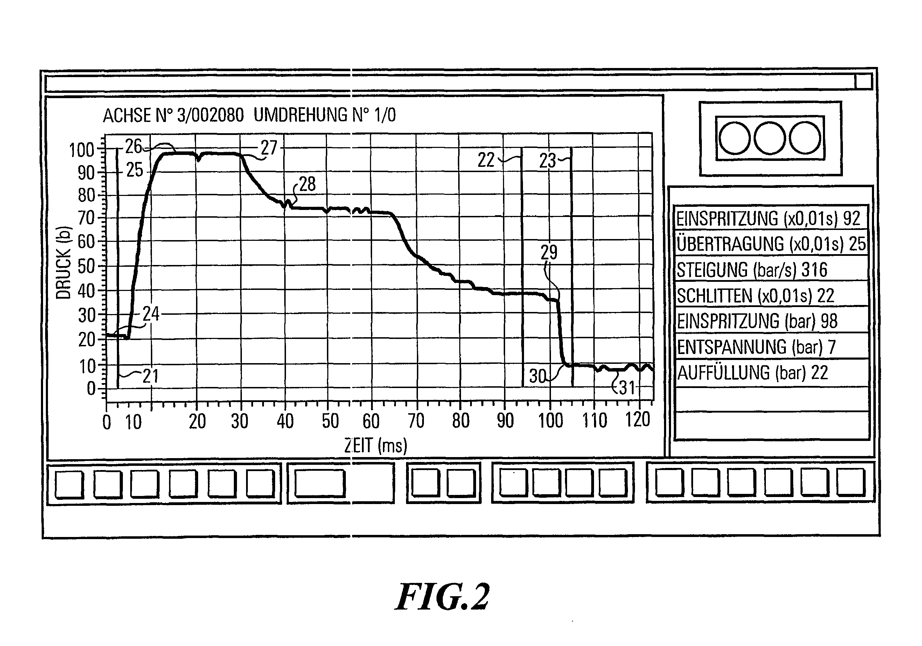

Das Programm erlaubt die Analyse und Interpretation der Druckdaten als Funktion der Zeit, wie man in den Figuren 2 bis 4 sehen kann.

In Figur 2 ist ein Fenster dargestellt, das dafür vorgesehen ist, auf dem Bildschirm 17 des Rechners 16 angezeigt zu werden. Im Inneren des Fensters ist eine Kurve angezeigt mit der Zeit in Millisekunden auf der Abszisse und dem Druck in Bar auf der Ordinate. Der Zeitpunkt 0 wird von dem Automaten 8 beim Kontakt zwischen der Fördereinrichtung 10 und dem Einspritzkopf 2 geliefert. Der vertikale Balken 21 entspricht einem von dem Automaten 8 gesendeten Signal für den Beginn der Verschiebungsbewegung des Schlittens 4. Der vertikale Balken 22 entspricht dem Zeitpunkt der durch den Automaten 8 gesteuerten Rückwärtsbewegung der Pumpe 3. Der vertikale Balken 23 entspricht der Rückwärtsbewegung des Verriegelungsfingers, der es erlaubt, die Bewegung des Schlittens 4 und die Bewegung der Fördereinrichtung 10 zeitlich zu synchronisieren.

Die Druckkurve als Funktion der Zeit besteht aus einer Mehrzahl von Phasen:
-Phase 24- konstanter Druck, der beim Zeitpunkt t=0 beginnt und sich über den vertikalen Balken 21 hinaus fortsetzt. Der Schlitten 4 verschiebt sich synchron zu der Fördereinrichtung 10. Der Einspritzkopf 2 nähert sich dem entsprechenden Schmiernippel 14.
-Phase 25- rasche Zunahme des Drucks, die dem Beginn der Übertragung von Schmiermittel von der Pumpe 3 zu der Fördereinrichtung 10 entspricht.
-Phase 26- im wesentlichen konstanter, erhöhter Druck während einer Dauer, die hier geringfügig kleiner als 20 ms ist.
-Phase 27- zu kurz, um in Figur 2 angemessen dargestellt werden zu können und die im allgemeinen einer Spitze am Ende der Phase 26 entspricht.
-Phase 28- Abnahme des Drucks, hier bei Lagern, und dem Ende der Übertragung von Schmiermittel entsprechend, wobei das vordefinierte Volumen während der vorhergehenden Phasen bereits übertragen wurde.
-Phase 29- nach dem vertikalen Balken 22 und der Auffüllung der Dosis der Dosierpumpe 3 entsprechend, daher ein Druckabfall bis auf einen Wert, der kleiner als derjenige der Phase 24 ist, bis zur Phase 30, die einen Tiefpunkt des Drucks darstellt und der Phase 31 der Stabilität oder des leichten Anstiegs des Drucks folgt.

Darüber hinaus erscheinen die Informationen zur Kennzeichnung der Achse, deren Schmierungskurve angezeigt wird, oben links vom Fenster. Es handelt sich hier um die Achse Nr. 3 einer Fördereinrichtung mit 2080 Achsen. Ebenso wird die Zahl der Umdrehungen der Fördereinrichtung seit dem Beginn der Messung angezeigt. Es handelt sich hier um die erste Umdrehung. Rechts vom Fenster wird oben ein Farbcode angezeigt, je nachdem, ob der Zustand der Achse, deren Kurve angezeigt wird, befriedigend, unbefriedigend oder besonders zu überwachen ist. Rechts vom Fenster wird die Einspritzdauer, die zwischen den Balken 21 und 22 eingeschlossen ist, und die Übertragungsdauer angezeigt, die als die Dauer definiert ist, während der der Druck größer als ein vorbestimmter Anteil ist, bespielsweise 90% des beobachteten maximalen Drucks während der Phasen 26 und 27. Die in Bar/Sekunde angegebene Steigung wird durch Ableitung der Kurve in Phase 25 berechnet.

Der Terminus "Schlitten" bezeichnet die Dauer der Rückkehr des Schlittens 4 zum Ausgangspunkt, so daß er für die folgende Einspritzung von Schmiermittel bereit ist. Der Terminus "Einspritzung" ist der maximale Einspritzdruck auf der angezeigten Kurve. Der Terminus "Entspannung" ist der minimale auf der Kurve gemessene Druck, im allgemeinen während der Phase 30. Der Terminus "Auffüllung" ist der Druck während der Phase 24, mit anderen Worten der Auffülldruck der Dosierpumpe 3.

Die minimalen und maximalen Werte dieser verschiedenen Merkmale werden definiert, um auf zuverlässiger Weise eine Kurve aufzufinden, die eine Anomalie aufweist. Tatsächlich droht ein durch Stäube oder Fremdkörper verschlossener Schmiernippel, eine Kurve mit einer zu hohen Übertragungsdauer, einer zu hohen Steigung, einem zu hohen Einspritzdruck und einem zu hohen Entspannungsdruck aufzuweisen, denn der Dosierer bleibt mit Schmiermittel gefüllt. Ein fehlender Schmiernippel, ja sogar eine fehlende Achse wird in einer zu geringen Steigung, einem zu geringen Einspritzdruck und einer ebenfalls zu geringen Übertragungsdauer zum Ausdruck kommen. Wenn der Vorratsbehälter für Schmiermittel, mit dem die Dosierpumpe 3 verbunden ist, leer ist, wird der Entspannungsdruck zu gering sein, denn dann wird nur Luft in die Dosierpumpe 3 eingelassen. Ebenso droht der Auffülldruck, auch zu gering zu sein.

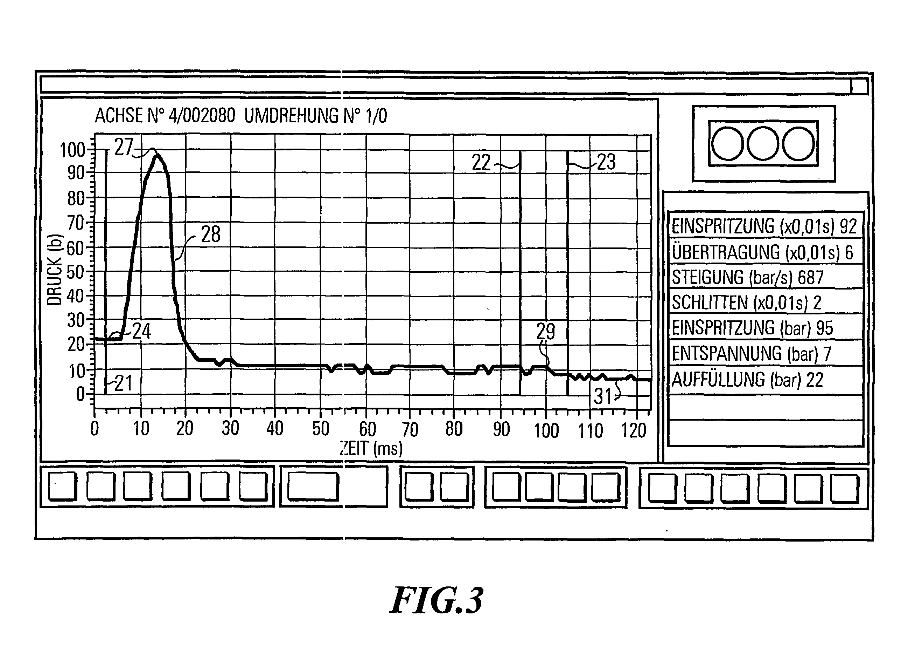

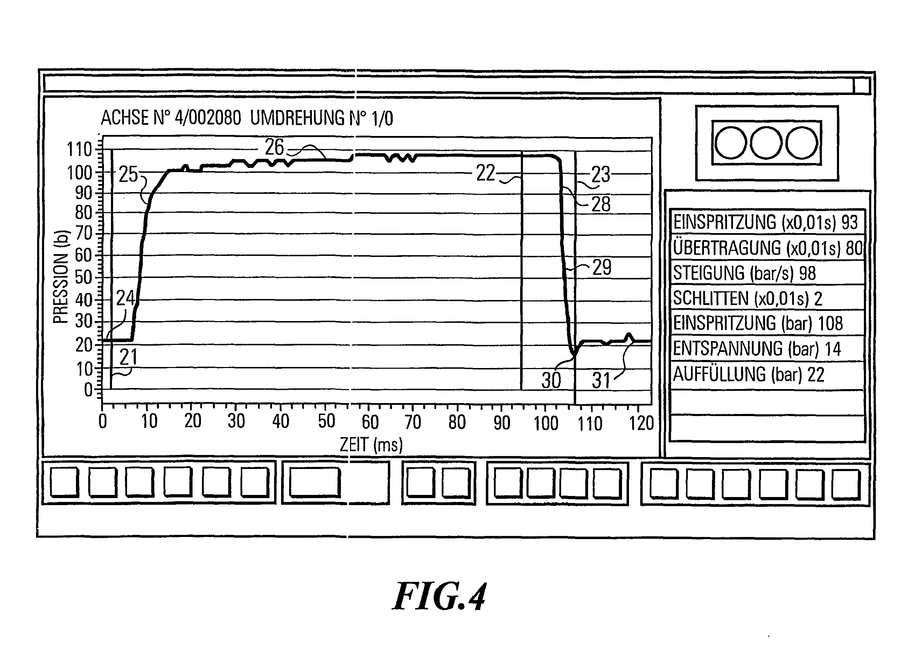

In Figur 3 ist ein Fenster dargestellt, das analog zu demjenigen der Figur 2 ist, abgesehen davon, daß die Kurve den Fall eines fehlenden Schmiernippels darstellt. man erkennt, daß es sich um den Schmiernippel der Achse Nr. 7 handelt. Die Übertragungsdauer ist hier sehr viel geringer. Umgekehrt ist in Figur 4 der Fall eines verstopften Schmiernippels dargestellt. Die Übertragungsdauer ist dann zu lang und der Einspritzdruck zu hoch.

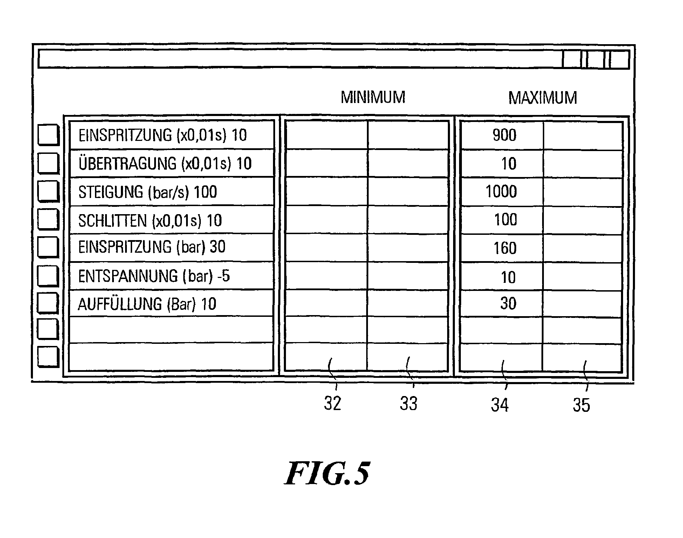

In Figur 5 ist ein Fenster dargestellt, das geeignet ist auf dem Bildschirm 17 des Rechners 16 angezeigt zu werden und die Einstellung der minimalen und maximalen Werte der Einspritzdauer, der Übertragungsdauer, der Steigung, der Rückkehrdauer des Schlittens, des Einspritzdrucks, des Entspannungsdrucks und des Auffülldrucks erlaubt. Die von der Bedienungsperson oder dem Systemlieferanten festgesetzten minimalen Werte erscheinen in der Spalte 32, während die entsprechenden maximalen Werte in Spalte 34 erscheinen. Die für eine gegebene Fördereinrichtung gemessenen minimalen Werte erscheinen in Spalte 33 und die gemessenen maximalen Werte erscheinen in Spalte 35.

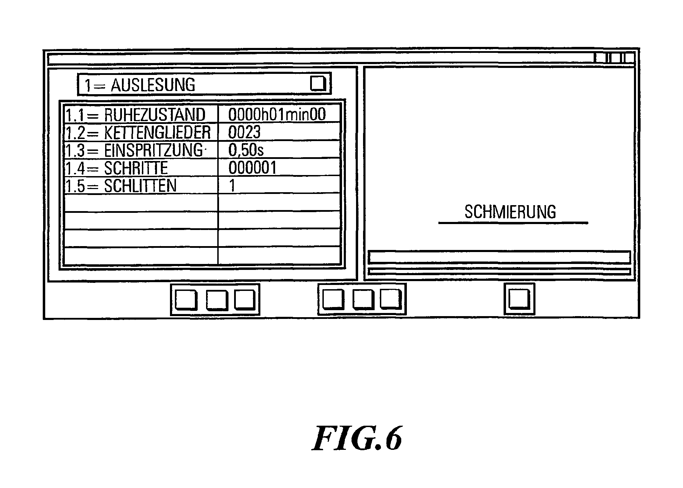

In Figur 6 ist ein Fenster angezeigt, das es erlaubt, Daten bezüglich der Fördereinrichtung einzugeben, wie beispielsweise die Ruhedauer zwischen zwei Schmierfolgen, die Zahl der Glieder, die Einspritzdauer, die Schrittweite P, was bedeutet, daß die Schmierung nur jedes P-ten Schmiernippels durchgeführt wird, was sich insbesondere im Falle von schnell beweglichen Fördereinrichtungen als nützlich herausgestellt hat, bei denen es bequemer ist nur jeden P-ten Schmiernippel zu schmieren und sie für eine vollständige Schmierung P Umdrehungen ausführen zu lassen. Ferner erscheinen die Zahl der Schlitten oder der Träger sowie weitere hier nicht ausgeführte Parameter.

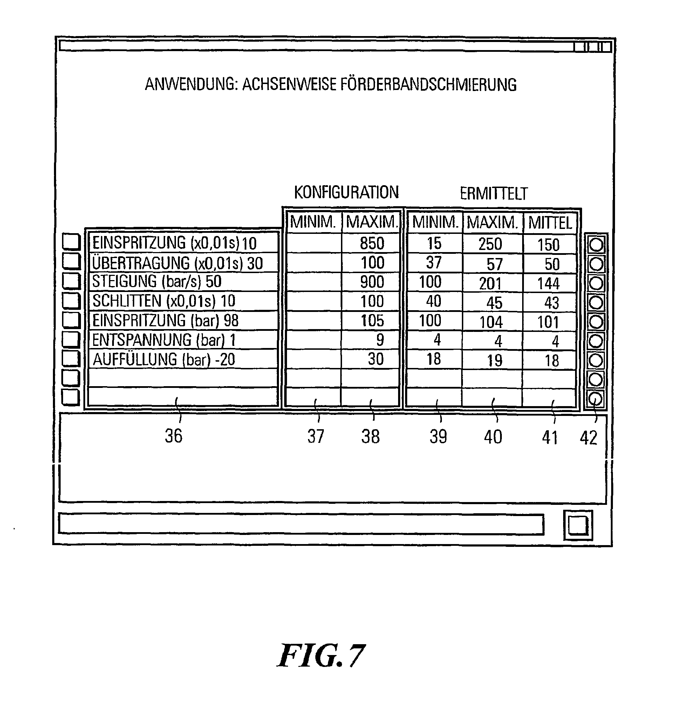

Figur 7 zeigt ein Fenster, das dafür vorgesehen ist, zur Ablesung der Zusammenfassung der Messergebnisse auf dem Bildschirm 17 des Rechners 16 angezeigt zu werden. Die sieben vorgenannten Merkmale sind in Spalte 36 angezeigt. Die vorbestimmten minimalen Werte erscheinen in Spalte 37. Die vorbestimmten maximalen Werte erscheinen in Spalte 38. Die gemessenen minimalen Werte erscheinen in Spalte 39, die gemessenen maximalen Werte in Spalte 40 und die gemessenen Mittelwerte in Spalte 41. In Spalte 42 erscheint ein Warnanzeiger, der eine grüne Farbe zeigt, solange der Wert zufriedenstellend ist, eine orange Farbe im Falle eines zu überwachenden Ergebnisses und eine rote Farbe im Falle ungenügender Ergebnisse.

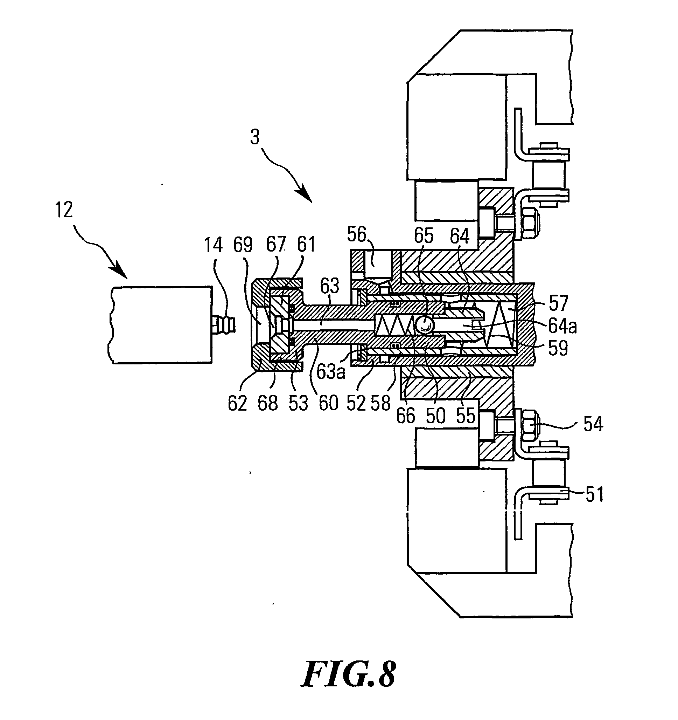

In Figur 8 ist ein Fenster von kleinerer Abmessung dargestellt, das einfacher auf einem Teil des Bildschirms 17 anzuzeigen ist und die im Fenster der Figur 7 angezeigten Informationen zusammenfaßt. Entsprechend den zuvor erläuterten Farben werden die Achsen in drei Kategorien eingeteilt: zufriedenstellend, zu überwachen, ungenügend. Im dargestellten Fall gehört keine Achse zur ungenügenden oder zu überwachenden Kategorie und die zwanzig analysierten Achsen gehören zur zufriedenstellenden Kategorie. Wenn man den Pointer der Maus auf den Pfeil 43 führt kann man eine Liste der Achsen je Kategorie anzeigen und indem man den Pointer auf den Bereich 44 verschiebt, in dem die Achsennummer angezeigt wird, kann man die visuelle Anzeige ausführlicher, die Achse betreffender Daten, beispielsweise in der in den Figuren 2 bis 4 gezeigten Art, auslösen.

Vorteilhafterweise wird der Rechner 16 mit einem Kommunikationsnetz der Internet-Art verbunden, das die Fernübertragung der den oben dargestellten Fenstern entsprechenden Daten erlaubt. Auf diese Weise kann man eine Fernüberwachung einer Fördereinrichtung realisieren und im Falle auszuwechselnder Teile entweder eine Bedienungsperson mit den einwandfreien Teilen schicken oder einen lokalen Instandsetzungsdienst benachrichtigen, daß dieses oder jenes Teil dieser oder jener Achse der Fördereinrichtung bald ausgewechselt werden muß.

Im Falle der Fernüberwachung, empfängt eine entfernte Bedienungsperson die Gesamtheit der die Fördereinrichtung betreffenden Daten, führt die Analyse der Daten aus, indem sie die Fehler der Elemente diagnostiziert, die als in ungenügendem oder zu überwachendem Zustand befindlich ausgewisen sind, und kann an einen lokalen Instandhaltungsdienst eine Zusammenfassung zurückschicken, die die Nummer des Elements, die Art der unnormalen Variablen und den wahrscheinlichsten Fehler sowie einen Vorschlag für eine Behebungsmaßnahme festlegt.

Man kann in Echtzeit den Schmierungszyklus optisch anzeigen, den Verlauf der Schmierungszyklen jedes zu schmierenden Elements analysieren und daraus eine Information bezüglich seines Zustandes ableiten.

Man kann den Automat leicht dafür programmieren, eine Schmierung in regelmäßigen Intervallen auszuführen. Der Rechner verarbeitet dann die Meßdaten während des Schmierungszyklus der Elemente der Fördereinrichtung und kann im Falle eines ungenügenden Wertes bei einem der Elemente eine Warnmeldung ausgeben. Die Warnmeldung kann auf dem Bildschirm 17 oder auf einem entfernt befindlichen Bildschirm angezeigt werden und kann von einem akustischen Alarm begleitet sein.

Außerdem kann man vorsehen, das System mit einem Temperaturaufnehmer zu komplettieren, der in der Nähe des Innenraums der Dosierpumpe 3 angeordnet sein .kann, um die Temperatur des Schmiermittels zu erfassen, und/oder in der Nähe der zu schmierenden Elemente der Fördereinrichtung, beispielsweise mittels eines in einem gewissen Abstand befindlichen Infrarotaufnehmers, um beispielsweise im Falle eines Betriebs bei erhöhter Temperatur die Schmierungszyklen zu verkürzen, woraus eine zufriedenstellende Schmierung resultiert, oder um sie umgekehrt im Falle eines Betriebs bei tiefer Temperatur auseinanderzuziehen, woraus eine Einsparung von Schmiermittel resultiert.

Das System kann auch mit der Steuerung eines elektrischen Antriebsmotors der Fördereinrichtung verbunden sein, wobei die Steuerung aus einem Rechner, einem Automaten oder auch einer Überwachungseinrichtung bestehen kann, so daß eine die von dem elektrischen Antriebsmotor verbrauchte Leistung betreffende Information zum Rechner 16 übertragen wird, der einen im Falle einer Zunahme der verbrauchten Leistung über einen vorbestimmten Wert hinaus vorgezogenen Schmierungszyklus auslösen kann.

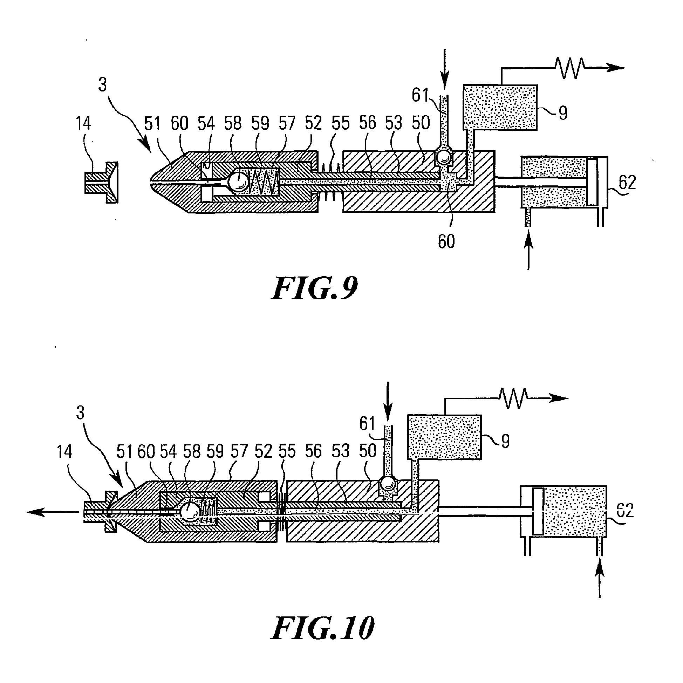

Wie insbesondere in den Figuren 9 und 10 zu sehen ist, umfaßt eine Pumpe 3 ein Tragelement 50, ein Kontaktstück 51, das einen relativ zu dem Tragelement 50 in einer Richtung senkrecht zur Bewegung des Tragelements translationsbeweglichen Zylinder bildet, und einen Kolben 52, der relativ zu dem Kontaktstück 51 translationsbeweglich ist, welches in der Lage ist mit einem Schmiernippel 14 in Kontakt zu kommen. Der Kolben 52 greift an einem Ende in eine Bohrung 53 des Tragelements 50 ein und an einem anderen Ende in eine Bohrung des Kontaktstücks 51. Zwischen dem Kolben 52 und dem geschlossenen Ende der Bohrung 53 ist eine Dosierkammer 63 ausgebildet.

Um den Kolben 52 herum ist zwischen dem. Tragelement 50 und dem Kontaktstück 51 eine Feder 55 angeordnet. Der Kolben 52 ist mit einem in Längsrichtung verlaufenden Loch versehen, das einen Kanal 56 für das Schmiermittel bildet. Der Kanal 56 umfaßt eine Erweiterung oder Kammer 57, die auf der Seites des Kontaktstücks 51 liegt und in der eine Verschlußkugel 58 und eine Feder 59 angeordnet sind, die ein Ventil bilden, das in der Ruhestellung verschlossen (Figur 9) und in der aktiven Stellung zur Schmierung offen ist (Figur 10). In der Ruhestellung hat das in der Kammer 57 enthaltene Schmiermittel daher keinen Kontakt mit der Umgebungsluft, wodurch seine Zersetzung vermieden wird.

Das Kontaktstück 51 umfaßt ein in der Bohrung 54 angeordnetes Rohr 60, das geeignet ist, mit der Kugel 58 in Kontakt zu kommen, um sie relativ zum Kolben 52 zu verschieben, wodurch es dem Schmiermittel ermöglicht wird, zum Schmiernippel 14 zu fließen. Die Bohrung 53 des Tragelements 50 steht mit einer Zuführleitung 61 für Schmiermittel in Verbindung, um in der Ruhestellung die Füllung der Dosierkammer 63 zu ermöglichen. Das Tragelement 50 ist mit einem Betätigungsglied 62 verbunden, beispielsweise einem Hydaulik- oder Pneumatikzylinder, das in der Lage ist, es translatorisch zu verschieben. Ein Druckaufnehmer 9 ist dafür vorgesehen, den Druck in der Dosierkammer 63 zu messen.

In der Ruhestellung (Figur 9) sind die Federn 55 und 59 entspannt. Das Tragelement 50 und das Kontaktstück 51 sind zueinander beabstandet und das Kontaktstück 51 ist von dem Schmiernippel 14 beabstandet. Die Kugel 58 ist in der Verschlußstellung.

In der aktiven Schmierungsstellung (Figur 10) verschiebt das Betätigungsglied 62 das Tragelement 50, den Kolben 52 und das Kontaktstück 51 zum Schmiernippel 14 hin. Das Kontaktstück 51 wird durch den Schmiernippel 14 gestoppt. Das Tragelement 50 setzt seine Bewegung fort und nähert sich dem Kontaktstück 51, während es die Feder 55 zusammendrückt. Die Kugel 58 bekommt mit dem Rohr 60 Kontakt, das ihre Bewegung blockiert, während es die Feder 59 zusammendrückt. Das Schmiermittel kann dann ausfließen.

Das System erlaubt es folglich, zu bestätigen, daß die Schmierung zufriedenstellend ist, die Parameter des Schmierungszyklus zu erfassen und den Schmierungszyklus zu überprüfen, Informationen bezüglich jedes Kettengliedes oder jedes Elements eines Förderbandes zu besorgen, das Schmiermittel insofern auf beste Weise auszuwählen, als es leicht ist, einen Schmierungszyklus mit einem anderen Schmiermittel als dem üblichen Schmiermittel durchzuführen, und die Druckkurven als Funktion der Zeit für jeden Schmierungszyklus zu analysieren, die Änderungen der Parametereinstellungen des Automaten zu programmieren und einzuhalten, die Einspritzkurven jedes Kettengliedes zur Analyse zu registrieren und zu archivieren. Die Analyse der Einspritzkurven erlaubt es, eine schlechte Schmierung oder eine Fehlerhaftigkeit des Elements (das Kettenglied kann offen, gebrochen, verstopft, etc. sein) zu erfassen.

Das System erlaubt folglich eine wirksame, vorsorgende Instandhaltung mit einer Überwachung jedes Elements der Fördervorrichtung und daher eine Verlängerung der Lebensdauer der Fördereinrichtung und eine Einsparung von Schmiermittel. Die Verlängerung der Lebensdauer der Fördereinrichtung ist ein wichtiger Vorteil hinsichtlich der Kosten einer Ersetzung und der Kosten, die mit der Unterbrechung einer Fertigung beim Ersetzen der Fördereinrichtung verbunden sind.

Außerdem kann man im Automaten einen so großen Speicher vorsehen, daß er die von dem Druckaufnehmer gemessenen Druckdaten speichern kann und daß eine mit der Instandhaltung befaßte Bedienungsperson in regelmäßigen, aber ausgedehnten Abständen mit einem tragbaren Rechner erscheint und ihn vorübergehend mit dem Automaten verbindet, um die Daten zu übertragen und zu analysieren.

## Patentansprüche

1. Vorrichtung zur automatischen Schmierung und Überwachung zumindest eines schmierfähigen Elements (12), wobei das System einen Einspritzkopf (1) für ein Schmiermittel, der mit dem Element (12) in Kontakt bringbar und durch den das Schmiermittel in einem Schmierzyklus in das wenigstens eine Element (12) einspritzbar ist, und eine Bewertungseinrichtung (8, 9, 16) mit einem Druckaufnehmer (9) umfasst, **dadurch gekennzeichnet, dass** durch den Druckaufnehmer (9) der zeitliche Verlauf des Einspritzdrucks des Schmiermittels während des Schmierzyklus als eine den Zustand des Elements (12) wiedergebende Variable automatisch erfaßbar und durch die Bewertungseinrichtung (8, 9, 16} der Zustand des Elements (12) in Abhängigkeit vom Verlauf des Einspritzdrucks bewertbar ist.

2. System nach Anspruch 1, **dadurch gekennzeichnet, dass** der Einspritzkopf (1) in regelmäßigen Abständen mit dem Element (12) in Kontakt bringbar ausgestaltet ist.

3. System nach Anspruch 1 oder 2, **dadurch gekennzeichnet, dass** das schmierfähige Element (12) als eine zwei Kettenglieder einer Fördereinrichtung verbindende Achse oder als ein Rollelement ausgestaltet ist.

4. System nach Anspruch 3, **dadurch gekennzeichnet, dass** die Fördereinrichtung eine Mehrzahl von schmierfähigen Elementen (12) aufweist.

5. System nach einem der oben genannten Ansprüche, **dadurch gekennzeichnet, dass** das Element (12) ein Aufnahmeorgan (14) aufweist, das geeignet ist, mit dem Einspritzkopf (1) zusammenzuwirken und ein zu schmierendes aktives Teil umfasst, und dass das System eine Bewertungseinrichtung umfasst, durch die der Zustand des aktiven Teils bewertbar ist.

6. System nach einem der oben genannten Ansprüche, **dadurch gekennzeichnet, dass** der Aufnehmer (9) in Fließrichtung stromauf vom Einspritzkopf angeordnet ist.

7. System nach Anspruch 6, **dadurch gekennzeichnet, dass** der Aufnehmer (9) in einer Dosierkammer einer Dosierpumpe (3) angeordnet ist.

8. System nach einem der oben genannten Ansprüche, **dadurch gekennzeichnet, dass** ein Temperaturaufnehmer vorgesehen ist, durch den die Temperatur des Schmiermittels erfassbar ist.

9. Verfahren zum automatischen Schmieren und Überwachen des Zustands eines schmierfähigen Elements, bei dem ein Einspritzkopf (1) das Schmiermittel während eines Schmierzyklus in das Element (12) einspritzt, **dadurch gekennzeichnet, dass** automatisch der Einspritzdruck als Funktion der Zeit während eines Schmierzyklus als eine den Zustand des Elements wiedergebende Variable erfasst und der Zustand des Elements in Abhängigkeit vom zeitlichen Verlauf des Einspritzdruckes bewertet wird.

10. Verfahren nach Anspruch 9, **dadurch gekennzeichnet, dass** zum Schmieren der Einspritzkopf (1) dem wenigstens einen Element (12) angenähert wird, dann das Schmiermittel eingespritzt und anschließend der Einspritzkopf (1) vom Element (12) abgelöst wird.

11. Verfahren nach einem der Ansprüche 9 bis 10, **dadurch gekennzeichnet, dass** der individuelle Zustand einer Mehrzahl von Elementen (14) gespeichert wird.

12. Verfahren nach einem der Ansprüche 9 bis 11, **dadurch gekennzeichnet, dass** die Schmierungszyklen in Abhängigkeit von einer Temperatur des Schmiermittels verkürzt oder auseinandergezogen werden.

13. Verfahren nach einem der Ansprüche 9 bis 12, **dadurch gekennzeichnet, dass** eine Dosierpumpe (3) mit dem Einspritzkopf translatorisch mit dem Element (14) mitbewegt wird.

14. Verfahren nach Anspruch 13, **dadurch gekennzeichnet, dass** ein die Pumpe (3) und den Einspritzkopf (1) tragender Schlitten (4) mit der Bewegung des Elements (14) verriegelt wird.

15. Verfahren nach einem der Ansprüche 9 bis 14, **dadurch gekennzeichnet, dass** das Element (14) geschmiert wird, während es sich bewegt.

16. Verfahren nach einem der Ansprüche 9 bis 15, **dadurch gekennzeichnet, dass** der Einspritzkopf (1) nacheinander mit weiteren sich bewegenden Elementen (14) in Kontakt gebracht wird und diese schmiert.

17. Verfahren nach einem der Ansprüche 9 bis 16, **dadurch gekennzeichnet, dass** der Zustand des Förderelements (12) in einstellbaren Intervallen während des Betriebs der Fördereinrichtung (10) bewertet wird.

18. Verfahren nach einem der Ansprüche 9 bis 17, **dadurch gekennzeichnet, dass** bei einer erhöhten Temperatur des Schmiermittels der Schmierzyklus verkürzt wird.

## Claims

1. A system for automatically lubricating and monitoring at least one lubricatable element (12), said system having an injection head (1) for a lubricant that is adapted to be brought into contact with the element (12) and through which the lubricant is injectable into the at least one element (12) during a lubrication cycle, and an evaluation device (8, 9, 16) comprising a pressure sensor (9), **characterized in that** the progress in time of the injection pressure of the lubricant during the lubrication cycle can be automatically sensed by the pressure sensor (9) as a variable showing the state of the element (12) and the state of said element (12) can be evaluated by the evaluation device (8, 9, 16) in response to the progress of the injection pressure.

2. The system as defined in claim 1, **characterized in that** the injection head (1) is configured to be brought into contact with the element (12) at regular intervals.

3. The system as defined in claim 1 or 2, **characterized in that** the lubricatable element (12) is configured as an axis connecting two chain links of a conveyor apparatus or as a roller element.

4. The system as defined in claim 3, **characterized in that** the conveyor apparatus has a plurality of lubricatable elements (12).

5. The system as defined in any one of the afore mentioned claims, **characterized in that** the element (12) has a receiving member (14) capable of cooperating with the injection head (1) and an active part to be lubricated and that the system has an evaluation device that permits to evaluate the state of the active part.

6. The system as defined in any one of the afore mentioned claims, **characterized in that** the sensor (9) is disposed upstream of the injection head as viewed in the direction of flow of the lubricant.

7. The system as defined in claim 6, **characterized in that** the sensor (9) is disposed in a dosing chamber of a dosing pump (3).

8. The system as defined in any one of the afore mentioned claims, **characterized in that** a temperature sensor is provided, said temperature sensor permitting to sense the temperature of the lubricant.

9. A method for automatically lubricating and monitoring the state of a lubricatable element, in which an injection head (1) injects the lubricant into the element (12) during a lubrication cycle, **characterized in that** the injection pressure as a function of the time during a lubrication cycle is automatically sensed as a variable representing the state of the element and that the state of the element is evaluated in response to the progress in time of the injection pressure.

10. The method as defined in claim 9, **characterized in that**, for lubrication, the injection head (1) is brought in proximity to the at least one element (12), the lubricant is injected next and the injection head (1) is then detached from the element (12).

11. The method as defined in any one of claims 9 to 10, **characterized in that** the individual state of a plurality of elements (14) is stored.

12. The method as defined in any one of claims 9 to 11, **characterized in that** the lubrication cycles are shortened or lengthened depending on a temperature of the lubricant.

13. The method as defined in any one of claims 9 to 12, **characterized in that** a dosing pump (3) with the injection head is moved in translation together with the element (14).

14. The method as defined in claim 13, **characterized in that** a cradle (4) carrying the pump (3) and the injection head (1) is locked by moving the element (14).

15. The method as defined in any one of claims 9 to 14, **characterized in that** the element (14) is lubricated while it is being moved.

16. The method as defined in any one of claims 9 to 15, **characterized in that** the injection head (1) is successively brought into contact with further moving elements (14) and lubricates the same.

17. The method as defined in any one of claims 9 to 16, **characterized in that** the state of the conveyor element (12) is evaluated at adjustable intervals during operation of the conveyor apparatus (10).

18. The method as defined in any one of claims 9 to 17, **characterized in that** the lubrication cycle is shortened at an increased temperature of the lubricant.

## Revendications

1. Système de lubrification et de surveillance automatique d'au moins un élément apte à la lubrification (12), le système comprenant une tête d'injection (1) pour un moyen de lubrification, qui peut être mis en contact avec l'élément (12) et à travers lequel le moyen de lubrification peut être injecté, pendant un cycle de lubrification, dans au moins un élément (12), et un dispositif d'évaluation (8, 9, 16) avec un capteur de pression (9), **caractérisé en ce que**, grâce au capteur de pression (9), le parcours temporel de la pression d'injection du moyen de lubrification peut être détecté automatiquement pendant le cycle de lubrification comme une variable reproduisant l'état de l'élément (12) et que, grâce au dispositif d'évaluation (8, 9, 16), l'état de l'élément (12) peut être évalué en fonction du parcours de la pression d'injection.

2. Système selon la revendication 1, **caractérisé en ce que** la tête d'injection (1) est conçue de manière à pouvoir être mise en contact avec l'élément (12) à intervalles réguliers.

3. Système selon la revendication 1 ou 2, **caractérisé en ce que** l'élément apte à la lubrification (12) est conçu comme un axe reliant deux maillons de chaîne d'un convoyeur ou comme un élément à rouleau.

4. Système selon la revendication 3, **caractérisé en ce que** le convoyeur présente une pluralité d'éléments aptes à la lubrification (12).

5. Système selon l'une quelconque des revendications précédentes, **caractérisé en ce que** l'élément (12) présente un organe de logement (14), qui est approprié pour agir conjointement avec la tête d'injection (1) et qui comprend une partie active à lubrifier et **en ce que** le système comprend un dispositif d'évaluation grâce auquel l'état de la partie active peut être évalué.

6. Système selon l'une quelconque des revendications précédentes, **caractérisé en ce que** le capteur (9) est disposé dans la direction d'écoulement en amont de la tête d'injection.

7. Système selon la revendication 6, **caractérisé en ce que** le capteur.(9) est disposé dans une chambre de dosage d'une pompe de dosage (3).

8. Système selon l'une quelconque des revendications précédentes, **caractérisé en ce qu'**est prévu un capteur de température grâce auquel peut être déterminée la température du moyen de lubrification.

9. Procédé de lubrification et de surveillance automatique de l'état d'un élément apte à la lubrification, dans lequel une tête d'injection (1) injecte le moyen de lubrification dans l'élément (12) pendant un cycle de lubrification, **caractérisé en ce que** la pression d'injection en tant que fonction de temps pendant un cycle de lubrification est détectée automatiquement en tant que variable reproduisant l'état de l'élément et que l'état de l'élément est évalué en fonction du parcours temporel de la pression d'injection.

10. Procédé selon la revendication 9, **caractérisé en ce que**, pour la lubrification, la tête d'injection (1) est approchée d'au moins un élément (12), que le moyen de lubrification est ensuite injecté puis que la tête d'injection (1) est détachée de l'élément (12).

11. Procédé selon l'une quelconque des revendications 9 à 10, **caractérisé en ce que** l'état individuel d'une pluralité d'éléments (14) est enregistré.

12. Procédé selon l'une quelconque des revendications 9 à 11, **caractérisé en ce que** les cycles de lubrification sont raccourcis ou allongés en fonction d'une température du moyen de lubrification.

13. Procédé selon l'une quelconque des revendications 9 à 12, **caractérisé en ce qu'**une pompe de dosage (3) est déplacée conjointement avec la tête d'injection par translation avec l'élément (14).

14. Procédé selon la revendication 13, **caractérisé en ce qu'**un chariot (4) portant la pompe (3) et la tête d'injection (1) est verrouillé avec le mouvement de l'élément (14) .

15. Procédé selon l'une quelconque des revendications 9 à 14, **caractérisé en ce que** l'élément (14) est lubrifié pendant qu'il se déplace.

16. Procédé selon l'une quelconque des revendications 9 à 15, **caractérisé en ce que** la tête d'injection (1) est mise en contact de manière successive avec d'autres éléments (14) en mouvement et les lubrifie.

17. Procédé selon l'une quelconque des revendications 9 à 16, **caractérisé en ce que** l'état de l'élément de transport (12) est évalué pendant le fonctionnement du convoyeur (10) à des intervalles pouvant être réglés.

18. Procédé selon l'une quelconque des revendications 9 à 17, **caractérisé en ce qu'**à une température élevée du moyen de lubrification, le cycle de lubrification est raccourci.
